# FASCICULE DE BREVET EUROPEEN

(11) **EP 3 334 193 B1**
(45) Date de publication et mention de la délivrance du brevet: **03.07.2019**
(21) Numéro de dépôt: 18153956.0
(22) Date de dépôt: 08.11.2016
(51) Int. Cl.: H04W 4/00, H04W 4/20, H04L 12/927, H04L 12/911, H04W 4/70

(54) **TRANSMISSION DE DONNEES DE VOLUME VARIABLE DANS UN RESEAU MOBILE DE COMMUNICATION**
ÜBERTRAGUNG VON DATEN VON VERÄNDERLICHEM VOLUMEN IN EINEM MOBILEN KOMMUNIKATIONSNETZ
VARIABLE VOLUME DATA TRANSMISSION IN A MOBILE COMMUNICATION NETWORK

(30) Priorité: 10.11.2015 FR 1560766
(43) Date de publication de la demande: 13.06.2018
(62) Demande divisionnaire de: 16806258.6
(73) Titulaire: Orange, 75015 Paris (FR)
(72) Inventeur: MOUQUET, Antoine, 92326 Châtillon Cedex (FR); EL MOUMOUHI, Sanaa, 92326 Châtillon Cedex (FR); MOUAFIK, Ali-Amine, 92326 Châtillon Cedex (FR)

(56) Documents cités:
- EP-A1- 2 509 345
- EP-A1- 2 884 780
- WO-A1-2013/012759
- WO-A1-2015/021276

## Description

La présente invention concerne le domaine de la transmission de données dans les réseaux mobiles de communication, et plus particulièrement la transmission de données pouvant présenter des volumes variables, notamment dans des réseaux de type cellulaire.

Les réseaux mobiles de communication actuels utilisent une architecture de type EPS (« Evolved Packet System »), telle que définie par l'organisme de normalisation 3GPP, qui repose notamment sur la distinction entre un canal de signalisation utilisé uniquement pour échanger des données de signalisation entre les divers équipements du réseau et un canal de transport de données utilisateur utilisé uniquement pour échanger des données utiles avec les terminaux mobiles connectés au réseau.

Ainsi, la transmission de données utiles vers un terminal mobile se fait habituellement dans un plan de transport, au moyen d'un canal de transport de données établi entre ce terminal mobile et l'entité réseau gérant l'accès aux réseaux externes au réseau mobile.

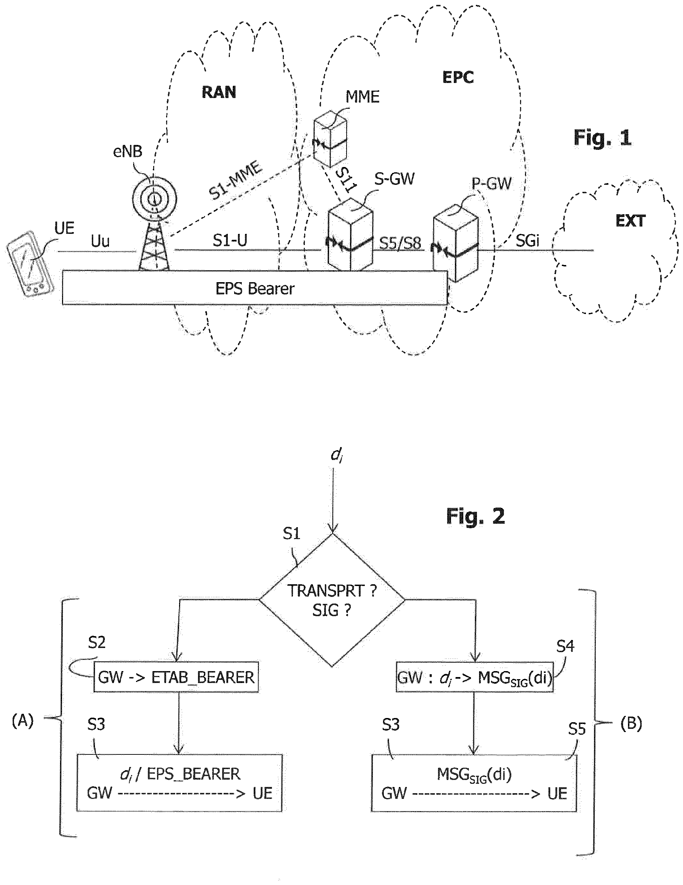

La figure 1 illustre un tel canal de transport de données, autrement appelé « Data radio Bearer » ou « EPS bearer » dans les normes 3GPP. Sur cette figure, ce canal de transport de données est porté par l'interface radio Uu reliant le terminal mobile UE et une station de base eNB dans la partie réseau d'accès RAN du réseau mobile, puis par l'interface S1-U reliant la station de base eNB à la partie coeur de réseau EPC du réseau mobile, jusqu'aux passerelles de service S-GW et de données P-GW, cette dernière servant alors à recevoir ou transmettre les données vers un autre réseau externe EXT, par exemple le réseau internet.

En ce qui concerne le canal de signalisation employée dans l'architecture EPS, il repose sur un canal logique porté par l'interface radio Uu, une interface dite « S1-MME » reliant la station de base et une entité de gestion de mobilité MME située dans la partie coeur de réseau EPC du réseau mobile.

Avec une telle architecture, pour chaque terminal, un canal de transport n'est établi que lorsque des données sont émises ou reçues par ce terminal, des échanges sur le canal de signalisation étant nécessaires pour établir ce canal de transport avant la transmission des données et le désactiver à l'issue de la transmission des données.

Le développement actuels des usages de type « internet des objets » (« internet of things » ou loT en anglais) amène à envisager des applications mettant en oeuvre des transmissions, par une multitude de terminaux simples tels que des capteurs, de très petits volumes de données, éventuellement contenues dans un seul paquet IP, contrairement aux transmissions classiques de données voix, image ou vidéo impliquant des smartphones.

L'architecture EPS évoquée ci-dessus n'est pas adaptée à ce type de transmission de petits volumes de données dans la mesure où, même pour transmettre un faible nombre de données contenues dans un unique paquet IP, il reste toujours nécessaire d'échanger des messages de signalisation entre le terminal et le réseau pour rétablir, puis désactiver, le canal de transport.

Afin d'améliorer l'efficacité du transport de petits volumes de données, notamment en termes de consommation énergétique du terminal, une solution spécifique à ce seul type d'usage, dénommée « Infrequent small data transmission using pre-establised NAS security », a été présentée dans le rapport technique 3GPP TR 23.720 v1.1.0 (clause 6.2).

Cette solution repose sur l'introduction d'une entité réseau spécifique à la transmission de données de type loT (autrement dit de faibles volume), désignée par « C-SGN », laquelle permet à des terminaux spécifiquement dédiés à ce type d'usage d'échanger des données de faible volume avec un réseau mobile en les encapsulant dans des messages de signalisation échangés avec l'entité C-SGN, de façon à éviter de monter un canal de transport.

Une telle solution peut être avantageuse lorsqu'un très faible volume de données doit être transféré, typiquement lorsque les données tiennent dans un seul paquet IP. Par contre, s'il s'avère que le volume de données à transférer est plus important et devient volumineux, cette solution entraîne une multiplication des messages de signalisation échangés, ce qui peut entraîner une occupation de la voie radio plus importante (et par conséquent une consommation énergétique plus importante) que ce qui serait le cas si un canal de transport classique était utilisé pour transmettre les données.

La demande WO 2013/012759 décrit par ailleurs une architecture réseau dans laquelle un serveur SPDS (« Short Packet Data Service ») est introduit, ce serveur pouvant déterminer que des paquets descendants doivent être transmis par un canal de signalisation plutôt que par un canal de transport. Lorsque c'est le cas, ce serveur SPDS dialogue avec l'entité de gestion de mobilité MME du réseau mobile selon un protocole spécifique (dit SPDS-AP) afin de lui transmettre à cette entité les paquets de faible volume. L'entité MME, recevant de tels paquets, doit alors envoyer au terminal destinataire un message de « paging » spécialement modifié pour le prévenir de l'arrivée de ce type spécifique de paquet descendant.

Ce mécanisme nécessite donc des modifications protocolaires lourdes, que ce soit au niveau de l'entité MME, afin que cette entité puisse non seulement dialoguer avec le serveur SPDS selon le protocole SPDS-AP mais également modifier au cas par cas les messages de « paging » qu'elle envoie aux terminaux mobiles lors d'une connexion descendante, mais aussi au niveau des terminaux mobiles eux-mêmes, afin qu'ils puissent interpréter les messages de « paging » modifiés que l'entité MME leur envoie en présence de paquets descendants à transmettre sur un canal de signalisation.

En outre, ce mécanisme est déclenché par le serveur SDPS dès l'arrivée de données considérées comme étant de faible volume. Or, entre le moment où le serveur SDPS entame le dialogue avec l'entité MME selon le protocole SPDS-AP et le moment où le terminal UE retourne une requête de service étendue afin d'obtenir les données descendantes par un canal de signalisation, cette situation peut évoluer, avec par exemple un afflux de données descendantes supplémentaires rendant caduque la décision du serveur SDPS et plus pertinente la transmission de toutes ces données descendantes par un canal de transport de données. Quand bien même le serveur SDPS décide d'inverser sa décision de sélection, un certain nombre de données descendantes auront déjà été transmises via un canal de signalisation établi pour l'occasion, alors que ce n'est pas le mode de transmission le plus approprié.

La demande de brevet EP 2 509 345 A1, pour sa part, décrit un système de transmission dans lequel une entité de gestion de mobilité (MME en anglais), lorsqu'elle réceptionne un paquet de données descendantes jugées comme correspondant à des « petites données », envoie au terminal mobile destinataire un message de paging indiquant l'utilisation du seul canal de contrôle pour transmettre ces données descendantes, avant même que le terminal mobile ne réponde à ce message de paging au moyen de l'insertion d'un message de type « NAS ServiceRequest » dans un message de type « RRCConnectionSetupComplete ».

Un tel mécanisme s'avère présenter des problèmes de fiabilité, en ce sens qu'une décision est prise quant à la nature de « petites données » des données descendantes, et donc du canal à utiliser pour la transmission de ces données, avant même d'envoyer le message de paging au terminal mobile. Ainsi, un canal de contrôle peut être sélectionné de suite pour transmettre ces données descendantes, à peine reçues, alors qu'elles peuvent s'avérer plus volumineuses qu'initialement jugé, et donc qu'un canal de transport serait plus approprié.

De plus, ce mécanisme requiert un changement protocolaire au niveau des premiers échanges avec le terminal mobile, que ce soit pour préparer ou interpréter le message de paging indiquant au terminal mobile qu'un canal de contrôle est à utiliser et le message de réponse de ce terminal mobile.

Il n'existe donc pas à l'heure actuelle d'équipement capable de traiter de manière flexible, efficacement et simplement, aussi bien la transmission de faibles volumes de données que la transmission de forts volumes de données au sein d'un réseau mobile.

La présente invention a pour objet d'améliorer cette situation.

Elle propose à cet effet un procédé de transmission de données entre un noeud reseau d'un reseau de communication mobile et un terminal mobile, mis en oeuvre par le noeud réseau suite à la réception d'au moins un paquet de données destiné au terminal mobile, le procédé comprenant l'émission d'un message d'avertissement vers le terminal mobile suite à la réception dudit au moins un paquet de données et la réception en réponse d'une requête de service du terminal mobile, ce procédé comprenant en outre les étapes suivantes, suite à la réception de la requête de service du terminal mobile :
déterminer, en fonction du volume des données à transmettre, un canal à utiliser pour transmettre les données parmi un canal de transport de données et un canal de signalisation du réseau mobile ;
déclencher l'établissement d'un canal de transport de données entre le terminal mobile et le noeud réseau et transmettre ledit au moins un paquet de données au moyen dudit canal de transport de données, lorsqu'un canal de transport de données est à utiliser ;
insérer les données à transmettre dans au moins un message de signalisation et transmettre ledit au moins un message de signalisation vers le terminal mobile, lorsqu'un canal de signalisation est à utiliser.

Ce procédé permet une sélection simplifiée du mode de transmission à utiliser pour des données descendantes, n'impliquant pas de changement protocolaire au niveau des premiers échanges avec le terminal mobile auquel sont destinés les paquets descendants. Cette sélection est par ailleurs plus fiable, car s'effectuant à un stade plus avancée du processus de connexion du terminal mobile au réseau, avec donc plus de recul sur le contexte de transmission des données.

Dans un mode de réalisation particulier, la détermination du canal à utiliser comprend les étapes suivantes :
déterminer le volume des données à transmettre ; et
comparer ce volume avec un volume seuil de décision, un canal de transport de données étant à utiliser lorsque ce volume est supérieur au volume seuil de décision et un canal de signalisation étant à utiliser lorsque ce volume est inférieur au volume seuil de décision.

Avantageusement, ce procédé comprend en outre les étapes suivantes, mises en oeuvre par le noeud réseau et préalables à la détermination du canal à utiliser :
déclencher la mémorisation du au moins un paquet de données à transmettre au terminal mobile reçu par le noeud réseau ; et
déterminer le volumes de données à transmettre en additionnant le nombre d'octets des paquets de données mémorisés, ou des données qu'ils contiennent, jusqu'à la réception de la requête de service.

Il est ainsi possible de prendre une décision plus fiable quant au mode de transmission à employer, à partir de l'évaluation du flux de données descendantes jusqu'au moment où le terminal mobile est prêt à recevoir ce flux, plutôt qu'en se fiant au volume de données du tout premier paquet descendant reçu au niveau d'un noeud réseau, qui peut ne pas refléter le volume de données du flux de données descendantes qui suit.

Alternativement, le procédé comprend en outre les étapes suivantes, mises en oeuvre par le noeud réseau et préalables à la détermination du canal à utiliser :
mémoriser le au moins un paquet de données à transmettre au terminal mobile reçu pendant une durée prédéterminée ;
le volume de données à transmettre étant calculé en additionnant le nombre d'octets des paquets de données mémorisées ou de données qu'ils contiennent.

Cela permet également de prendre une décision plus fiable quant au mode de transmission à employer qu'en se fiant au seul volume de données du tout premier paquet descendant reçu au niveau d'un noeud de réseau, en se fiant à un volume de données mesuré sur une plage de temps, permettant ainsi de discriminer les effets transitoires de volume sur cette plage de temps.

Selon un autre objet de la présente invention, il est proposé un noeud réseau, destiné à être utilisé dans un réseau mobile de télécommunications, comprend un module de traitement configuré pour émettre un message d'avertissement vers le terminal mobile suite à la réception d'au moins un paquet de données par une entité réseau, distincte du noeud réseau, et recevoir en réponse une requête de service du terminal mobile, le module de traitement étant configuré pour, suite à la réception de la requête de service du terminal mobile :
déterminer, en fonction du volume des données à transmettre et/ou d'un paramètre reçu du terminal mobile lors d'une phase d'attachement dudit terminal mobile au réseau, un canal à utiliser pour transmettre les données parmi un canal de transport de données et un canal de signalisation du réseau mobile ;
lorsqu'il est déterminé qu'un canal de transport de données est à utiliser, déclencher l'établissement d'un canal de transport de données avec le terminal mobile, en vue de transmettre ledit au moins un paquet de données au moyen dudit canal de transport de données,
lorsqu'il est déterminé qu'un canal de signalisation est à utiliser, insérer les données à transmettre dans au moins un message de signalisation et transmettre ledit au moins un message de signalisation vers le terminal mobile,

Ce noeud réseau peut en particulier être une entité de gestion de mobilité (« Mobility Management Entity » en anglais).

Selon un autre objet de l'invention, il est proposé un système comprend une première entité réseau et une deuxième entité réseau, la première entité réseau étant un noeud réseau tel que décrit ci-avant, la deuxième entité réseau comprenant un module de traitement apte à recevoir au moins un paquet de données à transmettre vers un terminal mobile et configuré pour transmettre ledit au moins un paquet de données à la première entité réseau afin que ladite première entité réseau transmette ledit au moins un paquet de données vers le terminal mobile après avoir déterminé un canal à utiliser, parmi un canal de transport de données et un canal de signalisation du réseau mobile, pour transmettre ledit au moins un paquet de données .

Dans un mode particulier de réalisation, la deuxième entité réseau est apte à mémoriser ledit au moins un paquet de données dans l'attente de la détermination, par la première entité réseau, du canal à utiliser pour transmettre ledit au moins un paquet de données.

La deuxième entité réseau peut en particulier être une passerelle réseau de type S-GW.

Selon un autre objet de l'invention, il est proposé un terminal mobile destiné à être utilisé avec un réseau mobile de télécommunications comprenant un noeud réseau apte à recevoir des données descendantes destinées au terminal mobile, comprenant un module de traitement apte à échanger des données avec le réseau mobile, le module de traitement étant configuré pour insérer, dans une requête d'attachement au réseau mobile de télécommunication, un paramètre indiquant si le terminal mobile souhaite utiliser, pour la transmission des données descendantes, des messages de signalisation ou un canal de transport de données établi avec le réseau mobile.

Un tel paramètre est destiné à être pris en compte, par un noeud réseau tel que ci-avant, pour déterminer si les données descendantes sont à transmettre vers le terminal mobile dans des messages de signalisation ou dans un canal un canal de transport de données établi avec le réseau mobile.

En particulier, lorsque le terminal mobile souhaite recevoir les données descendantes au moyen de messages de signalisation, ce paramètre peut prendre une valeur indiquant qu'il souhaite utiliser des messages de signalisation pour la transmission de données descendantes. Alternativement, lorsque le terminal mobile souhaite recevoir les données descendantes au moyen d'un canal de transport de données établi avec le réseau mobile, ce paramètre peut prendre une valeur indiquant qu'il souhaite utiliser un canal de transport de données pour la transmission de données descendantes.

Selon un autre objet de la présente invention, un programme d'ordinateur comporte des instructions de code pour la mise en oeuvre du procédé ci-avant, lorsque ce programme est exécuté par un module de traitement d'un noeud réseau, ainsi qu'un support de programme d'ordinateur, lisible par un processeur.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1 est un schéma synoptique illustrant un canal de transport de données typique tel qu'utilisé dans un réseau de communication mobile ;
- la figure 2 illustre les étapes du procédé selon le principe général de la présente invention ; et
- les figures 3A et 3B illustrent les étapes du procédé selon deux modes de réalisation de l'invention, dans lequel un noeud réseau transmet des données dites descendantes vers un terminal mobile.

On se réfère tout d'abord à la **figure 2** sur laquelle sont illustrées les étapes du procédé selon le principe général de la présente invention.

Ce procédé est employé dans le cadre de l'échange de données entre d'une part un terminal mobile UE (par exemple un smartphone, une tablette, un téléphone portable, un PC portable, objet communiquant, etc.) et, d'autre part, un noeud réseau GW d'un réseau mobile de communication auquel se connecte ce terminal mobile. Ce noeud réseau GW est en particulier située dans la partie coeur du réseau mobile, de sorte que les échanges transitent par un réseau d'accès RAN comprenant une station de base (ou encore eNodeB) auxquelles le terminal mobile peut se connecter par voie radio. Ce noeud réseau GW peut en particulier être une passerelle donnant accès à un réseau externe, de sorte qu'il puisse recevoir des paquets de données destinés au terminal UE en provenance de ce réseau externe ainsi que recevoir des paquets de données provenant du terminal UE et destinés à être transmis vers ce réseau externe.

Dans ce procédé, suite à la fourniture au noeud réseau GW d'un ou plusieurs paquet(s) contenant des données dᵢ à transmettre vers le terminal mobile UE (i.e. des données « descendantes »), le noeud réseau GW détermine (étape S1), en fonction du volume des données à transmettre, un mode de transmission à utiliser parmi deux modes possibles :
- un premier mode de transmission A dans lequel le canal à utiliser pour transmettre les données est un canal de transport de données établi dans le réseau mobile, en d'autres termes que la transmission des données est préférablement réalisée dans le plan de transport ;
- un deuxième mode de transmission B dans lequel le canal à utiliser pour transmettre les données est un canal de signalisation du réseau mobile, en d'autres termes que la transmission des données est préférablement réalisée dans le plan de signalisation.

Une fois le mode de transmission déterminé pour le(s) paquet(s) de données à transmettre au terminal mobile UE, ce mode est utilisé pour transmettre ces données à cet équipement.

Ainsi, dans le cas où il est déterminé que le premier mode de transmission A est à utiliser (autrement dit qu'un canal de transport de données est à utiliser), en particulier lorsqu'un fort volume de données est à transmettre, le noeud réseau GW déclenche (étape S2) l'établissement d'un canal de transport de données entre le terminal mobile et le noeud réseau, au moyen de messages de signalisation dédiés à cet effet, par exemple tels que ceux décrits dans les documents TS 23.401 et TS 24.301.

Une fois le canal de transport de données établi, le noeud réseau GW transmet (étape S3) le(s) paquet(s) de données qui lui ont été fournis vers le terminal mobile UE, au sein de ce canal de transport, les données dᵢ étant alors transmises dans le plan de transport.

A contrario, dans le cas où il est déterminé que le deuxième mode de transmission B est à utiliser (autrement dit qu'un canal de signalisation est à utiliser), en particulier lorsqu'un faible volume de données est à transmettre, le noeud réseau GW insère (étape S4) les données qui lui ont été fournies dans un ou plusieurs message(s) de signalisation qui sont ensuite transmis (étape S5) au terminal mobile UE, dans le plan de signalisation donc et sans avoir à établir de canal de transport de données dans le plan de transport.

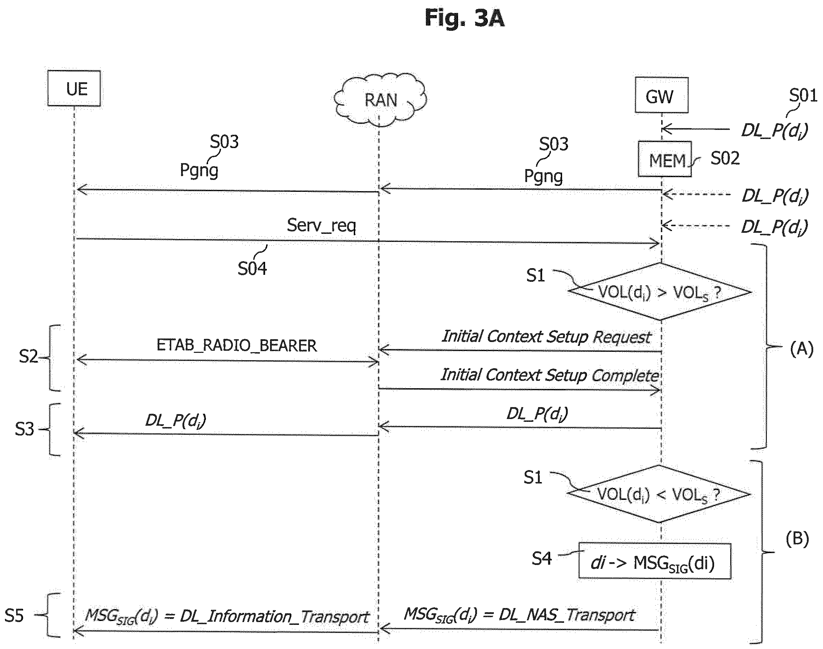

On se va se référer à présent aux figures 3A à 3B sur lesquelles sont illustrées les étapes de procédés selon deux modes de réalisation de l'invention dans lesquels le noeud réseau GW reçoit des paquets de données « descendantes » DL_P(dᵢ) à transmettre vers le terminal mobile UE. Dans ce mode de réalisation, le terminal UE est connecté au réseau de communication mobile par l'intermédiaire d'un réseau d'accès RAN comprenant une station de base, ou eNode B, à laquelle est connecté le terminal UE.

On se réfère dans un premier temps à la **figure 3A** illustrant un mode de réalisation spécifique d'un procédé de transmission de données descendantes selon l'invention, tenant compte dynamiquement du volume des données à transmettre.

Dans ce mode de réalisation, le procédé est déclenché ici par la réception par le noeud réseau GW (étape S01) d'un premier paquet de données DL_P(dᵢ) destiné au terminal UE et contenant des données utiles dᵢ destinées à ce même terminal, ce paquet pouvant provenir d'un réseau externe, par exemple internet.

Suite à la réception de ce premier paquet de données, le noeud réseau GW déclenche (étape S02) la mise en mémoire de ce premier paquet, ainsi que des éventuels autres paquets de données DL_P(d_{i,1}), DL_P(d_{i,2})... destinés au terminal UE qu'il peut recevoir par la suite. Cette mise en mémoire peut correspondre à une mise en mémoire tampon dans un module de mémorisation temporaire (ou buffer) du noeud réseau.

En outre, le noeud réseau GW émet (étape S03) vers le terminal UE un message d'avertissement Pgng, prenant typiquement la forme d'un message de « paging », ce message transitant par le réseau d'accès RAN auquel ce terminal UE est connecté par voie radio. En réponse à ce message, le terminal UE peut retourner (étape S04) une requête de service Serv_req, toujours via le réseau d'accès RAN auquel il est connecté par voie radio, afin notamment de signifier au noeud réseau GW qu'il accepte de recevoir les données qui lui sont destinées. Le terminal UE passe alors de l'état de veille à l'état connecté.

A ce stade, le noeud réseau GW procède à la détermination (étape S1) du canal à utiliser pour transmettre les paquets de données DL_P(dᵢ) qu'il a reçu pour le terminal UE, tel qu'Introduite précédemment en figure 2.

Pour ce faire, le noeud réseau GW peut déterminer dans un premier temps le volume des données à transmettre au terminal UE et en déduire s'il s'agit d'un faible ou d'un fort volume, en le comparant avec un volume seuil de décision VOL_{S} :
- si ce volume est inférieur à ce volume seuil de décision VOL_{S}, il est considéré qu'un faible volume de données est à transmettre et donc qu'un canal de signalisation est le plus approprié pour transmettre ces données.
- si ce volume est supérieur à ce volume seuil de décision VOL_{S}, il est alors considéré qu'un fort volume de données est à transmettre et qu'un canal de transport de données est le plus approprié pour transmettre ces données.

Le volume des données à transmettre peut être déterminé par le noeud réseau GW de plusieurs manières.

En particulier, on peut prendre en compte tous les paquets destinés à UE reçus depuis le premier paquet déclenchant l'émission du message d'avertissement Pgng jusqu'au moment de la réception de la requête de service Serv_req. On calcule alors le volume de données VOL(dᵢ) à transmettre en additionnant les octets de toutes les données contenues dans ces paquets (éventuellement après avoir décapsulé et mémorisé ces données, pour ne tenir compte que de la partie utile des données reçues), voire en additionnant les octets de tous les paquets DL_P(dᵢ) reçus, pris dans leur intégralité, lorsqu'ils ont été mémorisés tels quels à leur réception. Ce volume s'exprimant alors en nombre d'octets, on compare ce volume avec un volume seuil de décision VOL_{S} exprimé également en nombre d'octets, par exemple 2000 octets.

Une alternative peut consister à déclencher une temporisation d'une durée prédéterminée suite à la réception du premier paquet de données destiné au terminal UE et à ne tenir compte que des paquets destinés à UE qui sont reçus et mémorisés durant cette durée prédéterminée. Le calcul du volume et la comparaison avec le volume seuil de décision VOL_{S} peuvent alors se faire de manière similaire à ce qui est décrit précédemment.

Deux cas de figure se présentent alors, selon le canal qui est déterminé comme étant à utiliser pour transmettre les paquets de données au terminal UE :
- Si l'utilisation d'un canal de transport de données est déterminée comme étant appropriée (un fort volume de données étant à transmettre), ce qui correspond au mode de transmission A, le noeud réseau GW déclenche (étape S2) l'établissement d'un canal de transport de données, par exemple au moyen d'une procédure classique tirée des normes 3GPP. Ici, le noeud réseau GW transmet une requête d'établissement de contexte initial au réseau d'accès RAN, lequel établit alors un canal radio (« data radio bearer ») avec le terminal UE avant de retourner au noeud réseau (en cas de succès de l'établissement du canal radio) un message d'achèvement d'établissement de contexte initial.
   A l'issue de ces étapes, un canal de transport (i.e. un « S1 Bearer ») allant du terminal UE au noeud réseau GW est établi. Le noeud réseau GW peut alors transmettre (étape S3) tous les paquets de données DL_P(dᵢ) qu'il a mémorisés dans l'intervalle vers le terminal UE, au moyen de ce canal de transport.
- Par contre, lorsque l'utilisation d'un canal de signalisation est déterminée comme étant appropriée (un faible volume de données étant à transmettre), ce qui correspond au mode de transmission B, le noeud réseau GW ne déclenche pas d'établissement de canal de transport mais prépare un ou plusieurs message(s) de signalisation MSG(dᵢ) en y insérant (étape S4) les données dᵢ, extraites des paquets DL_P(dᵢ) reçus, à transmettre au terminal UE qu'il a pu mémoriser jusqu'à ce stade.

Le noeud réseau GW peut employer ici tout type de message de signalisation capable d'atteindre le terminal UE et de contenir des données de faible volume, par exemple des messages de type « NAS » comme discuté dans le document TR 23.720 v1.1.0, notamment un message de transport descendant NAS (« Downlink NAS Transport ») vers le réseau d'accès RAN.

Une fois ce (voire ces) message de signalisation préparé, il est transmis (étape S5) vers le terminal UE via le réseau d'accès RAN, lequel peut éventuellement modifier son format tout en conservant les données destinées à UE. Ainsi, ici, le message de transport descendant NAS est converti par le RAN en un message d'information de transfert descendant (« DL information transfer ») transmis par voie radio au terminal UE.

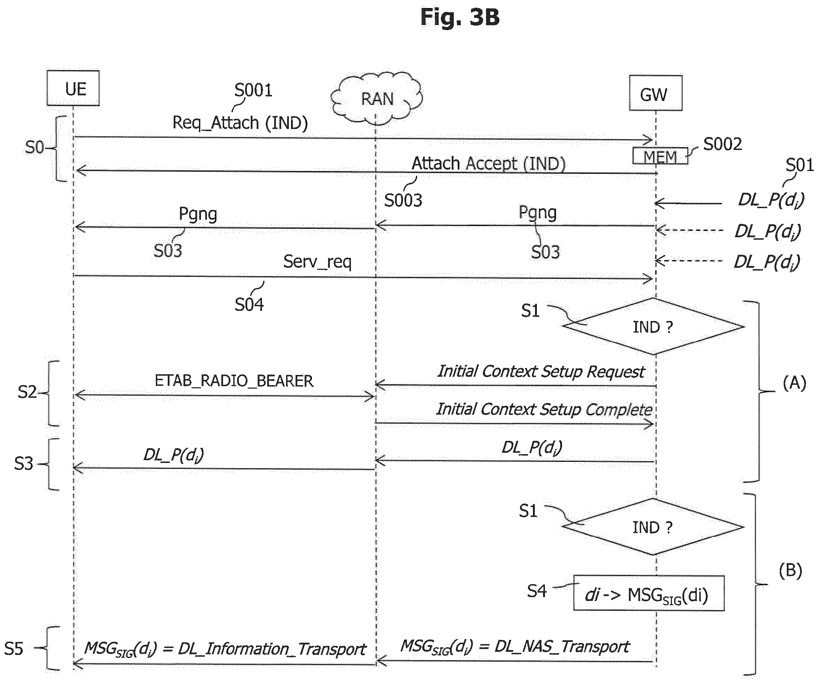

On se réfère à présent à la **figure 3B** illustrant un autre mode de réalisation, plus statique, d'un procédé de transmission de données descendantes selon l'invention.

Le procédé dans ce mode de réalisation se distingue du précédent en ce que la détermination du canal à utiliser ne se fait pas en fonction d'un volume de données, mais en fonction d'une indication transmise au préalable par le terminal UE.

Dans ce procédé, une phase S0 préalable d'attachement du terminal UE au réseau mobile a lieu, selon un processus traditionnel, afin de permettre la connexion du terminal au réseau.

Au cours de cette phase, le terminal UE émet (étape S001) une requête d'attachement, relayée par le RAN vers le noeud réseau GW. Cependant, dans le présent mode de réalisation, le terminal UE prépare cette requête en y insérant un paramètre IND prenant une première valeur indiquant qu'il souhaite utiliser un canal de signalisation ou une deuxième valeur indiquant qu'il souhaite utiliser un canal de transport de données, pour les données descendantes qui lui seraient destinées et qui seraient reçues par le noeud réseau GW.

Le noeud réseau GW mémorise (étape S002) ce paramètre en association avec un identifiant du terminal UE (par exemple son IMSI) et retourne (étape S003) un message d'acceptation de l'attachement, dans lequel il recopie le paramètre IND pour confirmer la prise en charge du canal choisi. Si l'utilisation de ce canal est refusée ou non supporté par le réseau, le noeud réseau GW ne recopie pas le paramètre IND dans le message d'acceptation de l'attachement.

Par la suite, lorsqu'il reçoit un paquet de données DL_P(dᵢ) destiné au terminal UE, le noeud réseau peut effectuer l'envoi d'un message d'avertissement et attendre en retour une requête de service, comme décrit précédemment (étapes S03 et S04).

Le noeud réseau GW vérifie alors s'il a mémorisé un paramètre IND en association avec l'identifiant du terminal destinataire UE des paquets. Si un identifiant IND dont la valeur indique un souhait de transmission par canal de signalisation a été mémorisé, le noeud réseau GW déclenche les étapes S4 et S5 décrites précédemment pour utiliser un canal de signalisation. Si par contre, un identifiant IND dont la valeur indique un souhait de transmission par canal de transport a été mémorisé, le noeud réseau GW déclenche les étapes S2 et S3 décrites précédemment pour utiliser un canal de transport de données.

Alternativement, on peut considérer qu'un canal de signalisation est à utiliser par défaut pour les données descendantes, en l'absence d'indicateur, un canal de transport n'étant à utiliser qu'en présence d'indicateur, ou vice versa.

Le paramètre indicatif du souhait d'un canal à utiliser, pour transmettre les données descendantes, peut s'imposer lors de la détermination du canal à utiliser pour tout type de données descendantes. Alternativement, ce paramètre peut être un souhait de canal à utiliser, sauf contrordre inséré avec les paquets descendants ou situation particulière. A titre d'exemple, un terminal UE adapté à de faibles volumes de données (par exemple capteur transmettant régulièrement des températures) peut indiquer au réseau son souhait d'utiliser un canal de signalisation, mais le noeud réseau GW peut éventuellement décider de passer outre ce souhait et de privilégier un canal de transport de données pour transmettre ponctuellement des données importantes de fort volume, comme une mise à jour du firmware du terminal par exemple.

Pour mettre en oeuvre le procédé décrit précédemment, le noeud réseau GW peut se présenter sous la forme d'un dispositif comprenant un module de traitement (par exemple un processeur) associé à un module de mémoire morte, dans lequel peuvent être mémorisées les instructions de code d'un programme d'ordinateur que le module de traitement peut exécuter pour mettre en oeuvre les étapes du procédé ci-avant, ainsi qu'un module de mémoire vive dans lequel peuvent être mémorisées les données descendantes, ou les paquets descendants, à traiter selon le procédé ci-avant. Le module de traitement peut être unique ou se décomposer en plusieurs modules (ou processeurs), éventuellement répartis dans plusieurs dispositifs et chargés d'exécuter une ou plusieurs des étapes du procédé ci-avant.

De son côté, le terminal mobile UE peut comprendre notamment deux modules distincts :
- D'une part, un (ou éventuellement plusieurs) module applicatif APP (un seul étant illustré ici) correspondant typiquement à une application logicielle installée ou embarquée dans le terminal UE, capable de traiter des données (éventuellement fournies via une interface utilisateur ou issues d'un capteur) et de fournir des données aux autres modules du terminal UE.
- D'autre part, un module de traitement COM comprenant notamment un module de communication radio (comprenant typiquement une chaîne radio, une antenne, un oscillateur, etc.) ayant pour fonction de communiquer avec le réseau mobile par voie radio. Ce module de traitement COM peut être implémenté sous la forme d'un processeur associé à une mémoire morte, ainsi qu'une mémoire vive, dans laquelle peut être mémorisée un programme d'ordinateur comprenant des instructions pour exécuter les différentes étapes du procédé ci-dessous, lorsqu'exécuté par le processeur.

Les modules applicatifs APP et de traitement COM peuvent être intégrés sur une même puce (chipset).

Ici, dans le mode de réalisation illustré en figure 3B, le module de traitement COM est configuré pour insérer le paramètre IND décrit précédemment dans les requêtes d'attachement transmises vers le réseau mobile pour permettre l'attachement du terminal UE à ce réseau.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, le procédé de transmission des données descendantes peut s'appliquer aussi bien aux données utiles di elles-mêmes qu'aux paquets (par exemple paquets IP) qui les contiennent. En particulier, le message de signalisation selon l'invention peut contenir aussi bien les données extraites des paquets fournis que les paquets dans leur ensemble, lorsque leur taille le permet. Inversement, dans le plan de transport, il est aussi bien possible de retransmettre les paquets fournis dans le canal de transport que de transmettre les données utiles, extraites de ces paquets, dans un tel canal de transport.

En outre, le noeud réseau GW a été décrit précédemment comme une seule entité réseau. Il est cependant tout à fait possible d'implémenter les fonctions précédemment décrites qu'il réalise en utilisant plusieurs entités distinctes. En particulier, une première entité réseau (par exemple une passerelle de type S-GW) pourrait être chargée de recevoir les paquets descendants, les mémoriser dans l'attente de la détermination, calculer le volume des données à transmettre et retransmettre ces paquets le cas échéant dans un canal de transport alors qu'une deuxième entité réseau (par exemple une entité de gestion de mobilité de type MME) serait chargée de comparer le volume de données à transmettre avec un volume seuil de transmission, instruire à la première entité réseau de transmettre les données dans un canal de transport de données si un tel canal est à utiliser, ou insérer et émettre les données dans un message de signalisation si un canal de signalisation est à utiliser. Toute autre répartition de ces fonctions entre ces deux, ou plus, d'entités réseaux est envisageable sans pour autant sortir du cadre de la présente invention.

### Enumération de certains aspects de l'invention

Les paragraphes suivants décrivent des aspects variés de modes de réalisation de l'invention :
Un procédé de transmission de données entre un noeud réseau d'un réseau de communication mobile et un terminal mobile, mis en oeuvre par le noeud réseau suite à la réception d'au moins un paquet de données destiné au terminal mobile, le procédé comprenant l'émission d'un message d'avertissement vers le terminal mobile suite à la réception dudit au moins un paquet de données et la réception en réponse d'une requête de service du terminal mobile, ce procédé comprenant en outre les étapes suivantes, suite à la réception de la requête de service du terminal mobile :
déterminer en fonction du volume des données à transmettre ou d'un paramètre reçu du lors d'une phase d'attachement dudit terminal mobile au réseau, un canal à utiliser pour transmettre les données parmi un canal de transport de données et un canal de signalisation du réseau mobile ;
déclencher l'établissement d'un canal de transport de données entre le terminal mobile et l'équipement réseau et transmettre ledit au moins un paquet de données au moyen dudit canal de transport de données, lorsqu'un canal de transport de données est à utiliser ;
insérer les données à transmettre dans au moins un message de signalisation et transmettre ledit au moins un message de signalisation vers le terminal mobile, lorsqu'un canal de signalisation est à utiliser.

Un tel procédé permet une sélection simplifiée du mode de transmission à utiliser pour des données descendantes, n'impliquant pas de changement protocolaire au niveau des premiers échanges avec le terminal mobile auquel sont destinés les paquets descendants. Cette sélection est par ailleurs plus fiable, car s'effectuant à un stade plus avancée du processus de connexion du terminal mobile au réseau, avec donc plus de recul sur le contexte de transmission des données.

La détermination du canal à utiliser peut comprendre en outre les étapes suivantes :
déterminer le volume des données à transmettre ; et
comparer ce volume avec un volume seuil de décision, un canal de transport de données étant à utiliser lorsque ce volume est supérieur au volume seuil de décision et un canal de signalisation étant à utiliser lorsque ce volume est inférieur au volume seuil de décision.

Un tel procédé peut comprendre en outre les étapes suivantes, mises en oeuvre par le noeud réseau et préalables à la détermination du canal à utiliser :
déclencher la mémorisation du au moins un paquet de données à transmettre au terminal mobile reçu par le noeud réseau ; et
déterminer le volumes de données à transmettre en additionnant le nombre d'octets des paquets de données mémorisés, ou des données qu'ils contiennent, jusqu'à la réception de la requête de service.

Il est ainsi possible de prendre une décision plus fiable quant au mode de transmission à employer, à partir de l'évaluation du flux de données descendantes jusqu'au moment où le terminal mobile est prêt à recevoir ce flux, plutôt qu'en se fiant au volume de données du tout premier paquet descendant reçu au niveau d'un noeud réseau, qui peut ne pas refléter le volume de données du flux de données descendantes qui suit.

Un tel procédé comprend en outre les étapes suivantes, mises en oeuvre par le noeud réseau et préalables à la détermination du canal à utiliser :
mémoriser le au moins un paquet de données à transmettre au terminal mobile reçu pendant une durée prédéterminée ;
le volume de données à transmettre étant calculé en additionnant le nombre d'octets des paquets de données mémorisées ou de données qu'ils contiennent.

Cela permet également de prendre une décision plus fiable quant au mode de transmission à employer qu'en se fiant au seul volume de données du tout premier paquet descendant reçu au niveau d'un noeud de réseau, en se fiant à un volume de données mesuré sur une plage de temps, permettant ainsi de discriminer les effets transitoires de volume sur cette plage de temps.

Le noeud réseau peut déterminer qu'un canal de signalisation est à utiliser après avoir reçu, dans une requête d'attachement du terminal au réseau, un paramètre indiquant que les données à transmettre présentent un faible volume lors d'une phase d'attachement du terminal au réseau et/ou détermine qu'un canal de transport de données est à utiliser après avoir reçu, dans une requête d'attachement du terminal au réseau, un paramètre indiquant que les données à transmettre présentent un fort volume.

Il est ainsi possible, pour le terminal mobile, d'influer sur la décision au niveau du réseau quant à la sélection du mode de transmission des données descendantes.

Selon un autre aspect de l'invention, il est proposé un noeud réseau, destiné à être utilisé dans un réseau mobile de télécommunications, comprenant un module de traitement apte à recevoir au moins un paquet de données à transmettre vers un terminal mobile, ledit module de traitement étant configuré pour émettre un message d'avertissement vers le terminal mobile suite à la réception dudit au moins un paquet de données et recevoir en réponse une requête de service du terminal mobile, le module de traitement de ce noeud réseau étant configuré pour, suite à la réception de la requête de service du terminal mobile :
déterminer, en fonction du volume des données à transmettre ou d'un paramètre reçu du terminal mobile lors d'une phase d'attachement dudit terminal mobile au réseau, un canal à utiliser pour transmettre les données parmi un canal de transport de données et un canal de signalisation du réseau mobile ;
déclencher l'établissement d'un canal de transport de données avec le terminal mobile et transmettre ledit au moins un paquet de données au moyen dudit canal de transport de données, lorsqu'un canal de transport de données est à utiliser ;
insérer les données à transmettre dans au moins un message de signalisation et transmettre ledit au moins un message de signalisation vers le terminal mobile, lorsqu'un canal de signalisation est à utiliser.

Selon un autre aspect de la présente invention, il est proposé un terminal mobile, destiné à être utilisé avec un réseau mobile de télécommunications comprenant un noeud réseau apte à recevoir des données descendantes destinées à ce terminal mobile, comprenant un module de traitement apte à échanger des données avec le réseau mobile, le module de traitement étant configuré pour insérer, dans une requête d'attachement au réseau mobile de télécommunication, un paramètre indiquant si le terminal mobile souhaite utiliser un canal de signalisation ou un canal de transport de données pour la transmission des données descendantes, ledit paramètre étant destiné à être utilisé par le noeud réseau pour déterminer le canal à utiliser pour transmettre les données descendantes parmi un canal de transport de données et un canal de signalisation du réseau mobile.

Selon un autre objet de la présente invention, il est proposé un programme d'ordinateur comportant des instructions de code pour la mise en oeuvre du procédé de transmission de données ci-avant, lorsque ce programme est exécuté par un module de traitement d'un noeud réseau. Selon un autre objet de la présente invention, un programme d'ordinateur comporte des instructions de code pour la mise en oeuvre du procédé ci-avant, lorsque ce programme est exécuté par un module de traitement d'un noeud réseau, ainsi qu'un support de programme d'ordinateur, lisible par un processeur.

D'autres variations des modes de réalisation décrits précédemment peuvent être envisagées, sans pour autant sortir de la portée de la présente invention telle qu'elle est définie par les revendications ci-après.

## Revendications

1. Procédé de transmission de données entre un noeud réseau (GW) d'un réseau de communication mobile et un terminal mobile (UE), mis en oeuvre par le noeud réseau suite à la réception d'au moins un paquet de données (DL_P(dᵢ)) destiné au terminal mobile, le procédé comprenant l'émission (S03) d'un message d'avertissement (Pgng) vers le terminal mobile suite à la réception dudit au moins un paquet de données et la réception (S04) en réponse d'une requête de service (Serv_req) du terminal mobile,
le procédé étant **caractérisé en ce qu'**il comprend les étapes suivantes, suite à la réception de la requête de service du terminal mobile :
déterminer (S1), en fonction du volume des données à transmettre, un canal à utiliser pour transmettre les données parmi un canal de transport de données et un canal de signalisation du réseau mobile ;
déclencher (S2) l'établissement d'un canal de transport de données entre le terminal mobile et le noeud réseau et transmettre (S3) ledit au moins un paquet de données au moyen dudit canal de transport de données, lorsqu'un canal de transport de données est à utiliser ;
insérer (S4) les données à transmettre dans au moins un message de signalisation (MSG(di)) et transmettre (S5) ledit au moins un message de signalisation vers le terminal mobile, lorsqu'un canal de signalisation est à utiliser.

2. Procédé selon la revendication 1, dans lequel la détermination (S1) du canal à utiliser comprend les étapes suivantes :
déterminer le volume (VOL(dᵢ)) des données à transmettre ; et
comparer ledit volume avec un volume seuil de décision (VOL_{S}), un canal de transport de données étant à utiliser lorsque ledit volume est supérieur au volume seuil de décision et un canal de signalisation étant à utiliser lorsque ledit volume est inférieur au volume seuil de décision.

3. Procédé selon la revendication 2, comprenant en outre les étapes suivantes, mises en oeuvre par le noeud réseau et préalables à la détermination (S1) du canal à utiliser :
déclencher (S02) la mémorisation du au moins un paquet de données à transmettre au terminal mobile reçu par le noeud réseau ; et
déterminer le volume de données à transmettre en additionnant le nombre d'octets des paquets de données mémorisés, ou des données qu'ils contiennent, jusqu'à la réception de la requête de service.

4. Procédé selon la revendication 2, comprenant en outre les étapes suivantes, mises en oeuvre par le noeud réseau et préalables à la détermination du canal à utiliser :
mémoriser le au moins un paquet de données à transmettre au terminal mobile reçu pendant une durée prédéterminée ;
le volume de données à transmettre étant calculé en additionnant le nombre d'octets des paquets de données mémorisées ou de données qu'ils contiennent.

5. Noeud réseau, destiné à être utilisé dans un réseau mobile de télécommunications, comprenant un module de traitement configuré pour émettre (S03) un message d'avertissement (Pgng) vers le terminal mobile suite à la réception d'au moins un paquet de données par une entité réseau, distincte du noeud réseau, et recevoir (S04) en réponse une requête de service (Serv_req) du terminal mobile,
le noeud réseau étant **caractérisé en ce que** le module de traitement est configuré pour, suite à la réception de la requête de service du terminal mobile :
déterminer (S1), en fonction du volume des données à transmettre et/ou d'un paramètre reçu du terminal mobile lors d'une phase d'attachement dudit terminal mobile au réseau, un canal à utiliser pour transmettre les données parmi un canal de transport de données et un canal de signalisation du réseau mobile ;
lorsqu'il est déterminé qu'un canal de transport de données est à utiliser, déclencher (S2) l'établissement d'un canal de transport de données avec le terminal mobile, en vue de transmettre (S3) ledit au moins un paquet de données au moyen dudit canal de transport de données,
lorsqu'il est déterminé qu'un canal de signalisation est à utiliser, insérer (S4) les données à transmettre dans au moins un message de signalisation (MSG(di)) et transmettre (S5) ledit au moins un message de signalisation vers le terminal mobile,

6. Noeud réseau selon la revendication 5, **caractérisé en ce que** ledit noeud réseau est une entité de gestion de mobilité (MME).

7. Système comprenant une première entité réseau et une deuxième entité réseau, la première entité réseau étant un noeud réseau selon l'une des revendications 5 ou 6, dans lequel la deuxième entité réseau comprend un module de traitement apte à recevoir au moins un paquet de données (DL_P(dᵢ)) à transmettre vers un terminal mobile (UE) et configuré pour transmettre ledit au moins un paquet de données (DL_P(dᵢ)) à la première entité réseau afin que ladite première entité réseau transmette ledit au moins un paquet de données (DL_P(dᵢ)) vers le terminal mobile (UE) après avoir déterminé un canal à utiliser, parmi un canal de transport de données et un canal de signalisation du réseau mobile, pour transmettre ledit au moins un paquet de données (DL_P(dᵢ)).

8. Système selon la revendication 7, dans lequel la deuxième entité réseau est apte à mémoriser ledit au moins un paquet de données (DL_P(dᵢ)) dans l'attente de la détermination, par la première entité réseau, du canal à utiliser pour transmettre ledit au moins un paquet de données.

9. Système selon l'une des revendications 7 ou 8, dans lequel la deuxième entité réseau est une passerelle réseau de type S-GW.

10. Terminal mobile (UE) destiné à être utilisé avec un réseau mobile de télécommunications comprenant un noeud réseau apte à recevoir des données descendantes destinées au terminal mobile, comprenant un module de traitement (COM) apte à échanger des données avec le réseau mobile, le module de traitement étant configuré pour insérer, dans une requête d'attachement au réseau mobile de télécommunication, un paramètre (IND) indiquant si le terminal mobile souhaite utiliser, pour la transmission des données descendantes, des messages de signalisation ou un canal de transport de données établi avec le réseau mobile.

11. Terminal mobile (UE) selon la revendication 10, dans lequel, lorsque le terminal mobile souhaite recevoir les données descendantes au moyen de messages de signalisation, le paramètre (IND) prend une valeur indiquant qu'il souhaite utiliser des messages de signalisation pour la transmission de données descendantes.

12. Terminal mobile (UE) selon la revendication 10, dans lequel, lorsque le terminal mobile souhaite recevoir les données descendantes au moyen d'un canal de transport de données établi avec le réseau mobile, le paramètre (IND) prend une valeur indiquant qu'il souhaite utiliser un canal de transport de données pour la transmission de données descendantes.

13. Programme d'ordinateur comportant des instructions de code pour la mise en oeuvre du procédé de transmission de données selon l'une des revendications 1 à 4, lorsque ce programme est exécuté par un module de traitement d'un noeud réseau (GW).

## Patentansprüche

1. Verfahren zur Datenübertragung zwischen einem Netzknoten (GW) eines mobilen Kommunikationsnetzes und einem mobilen Endgerät (UE), das vom Netzknoten nach dem Empfang mindestens eines für das mobile Endgerät bestimmten Datenpakets (DL_P(dᵢ)) durchgeführt wird, wobei das Verfahren das Senden (S03) einer Warnmeldung (Pgng) an das mobile Endgerät nach dem Empfang des mindestens einen Datenpakets und den Empfang (S04) einer Dienstanforderung (Serv_req) vom mobilen Endgerät als Antwort enthält,
wobei das Verfahren **dadurch gekennzeichnet ist, dass** es nach dem Empfang der Dienstanforderung vom mobilen Endgerät die folgenden Schritte enthält:
Bestimmen (S1), abhängig vom Volumen der an das mobile Endgerät zu übertragenden Daten, eines zur Übertragung der Daten zu verwendenden Kanals zwischen einem Datentransportkanal und einem Signalisierungskanal des mobilen Netzes;
Einleiten (S2) der Herstellung eines Datentransportkanals zwischen dem mobilen Endgerät und der Netzkoten und Übertragen (S3) des mindestens einen Datenpakets mittels des Datentransportkanals, wenn ein Datentransportkanal verwendet werden soll;
Einfügen (S4) der zu übertragenden Daten in mindestens eine Signalisierungsnachricht (MSG(di)) und Übertragen (S5) der mindestens einen Signalisierungsnachricht an das mobile Endgerät, wenn ein Signalisierungskanal verwendet werden soll.

2. Verfahren nach Anspruch 1, wobei die Bestimmung (S1) des zu verwendenden Kanals die folgenden Schritte enthält:
Bestimmen des Volumens (VOL(di)) der an der mobile Endgerät zu übertragenden Daten; und
Vergleichen des Volumens mit einem Entscheidungsschwellenvolumen (VOLS), wobei ein Datentransportkanal zu verwenden ist, wenn das Volumen größer als das Entscheidungsschwellenvolumen ist, und ein Signalisierungskanal zu verwenden ist, wenn das Volumen kleiner als das Entscheidungsschwellenvolumen ist.

3. Verfahren nach Anspruch 2, das außerdem die folgenden Schritte enthält, die vom Netzknoten durchgeführt werden und vor der Bestimmung (S1) des zu verwendenden Kanals liegen:
Einleiten (S02) der Speicherung des vom Netzknoten empfangenen mindestens einen an das mobile Endgerät zu übertragenden Datenpakets; und
Bestimmen des an das mobile Endgerät zu übertragenden Datenvolumens durch Addieren der Anzahl von Bytes der gespeicherten Datenpakete oder der Daten, die sie enthalten, bis zum Empfang der Dienstanforderung.

4. Verfahren nach Anspruch 2, das außerdem die folgenden Schritte enthält, die vom Netzknoten durchgeführt werden und vor der Bestimmung des zu verwendenden Kanals liegen:
Speichern des während einer vorbestimmten Dauer empfangenen, an das mobile Endgerät zu übertragenden mindestens einen Datenpakets;
wobei das an das mobile Endgerät zu übertragende Datenvolumen durch Addieren der Anzahl von Bytes der gespeicherten Datenpakete oder von Daten, die sie enthalten, berechnet wird.

5. Netzknoten, der dazu bestimmt ist, in einem mobilen Telekommunikationsnetz verwendet zu werden, der ein Verarbeitungsmodul enthält, das konfiguriert ist, nach dem Empfang mindestens eines Datenpakets durch eine Netzentität, die sich vom Netzknoten unterscheidet, eine Warnmeldung (Pgng) an das mobile Endgerät zu senden (S03) und als Antwort eine Dienstanforderung (Serv_req) vom mobilen Endgerät zu empfangen (S04),
wobei der Netzknoten **dadurch gekennzeichnet ist, dass** das Verarbeitungsmodul konfiguriert ist, nach dem Empfang der Dienstanforderung vom mobilen Endgerät:
abhängig vom Volumen der an das mobile Endgerät zu übertragenden Daten oder von einem vom mobilen Endgerät während einer Verbindungsphase des mobilen Endgeräts mit dem Netz empfangenen Parameter einen zur Übertragung der Daten zu verwendenden Kanal zwischen einem Datentransportkanal und einem Signalisierungskanal des mobilen Netzes zu bestimmen (S1);
wenn bestimmt wird, dass ein Datentransportkanal verwendet werden soll, die Herstellung eines Datentransportkanals mit dem mobilen Endgerät einzuleiten (S2), um das mindestens eine Datenpaket mittels des Datentransportkanals zu übertragen (S3);
wenn bestimmt wird, dass ein Signalisierungskanal verwendet werden soll, die zu übertragenden Daten in mindestens eine Signalisierungsnachricht (MSG(di)) einzufügen (S4) und die mindestens eine Signalisierungsnachricht an das mobile Endgerät zu übertragen (S5).

6. Netzknoten nach Anspruch 5, **dadurch gekennzeichnet, dass** der Netzknoten eine Mobilitätsverwaltungsentität (MME) ist.

7. System, das eine erste Netzentität und eine zweite Netzentität enthält, wobei die erste Netzentität ein Netzknoten nach einem der Ansprüche 5 oder 6 ist, wobei die zweite Netzentität ein Verarbeitungsmodul enthält, das mindestens ein an ein mobiles Endgerät (UE) zu übertragendes Datenpaket (DL_P(di)) empfangen kann und konfiguriert ist, das mindestens eine Datenpaket (DL_P(di)) an die erste Netzentität zu übertragen, damit die erste Netzentität das mindestens eine Datenpaket (DL_P(di)) an das mobile Endgerät (UE) überträgt, nachdem ein zu verwendender Kanal unter einem Datentransportkanal und einem Signalisierungskanal des mobilen Netzes bestimmt wurde, um das mindestens eine Datenpaket (DL_P(di)) zu übertragen.

8. System nach Anspruch 7, wobei die zweite Netzentität fähig ist, in Erwartung der Bestimmung des zur Übertragung des mindestens einen Datenpakets zu verwendenden Kanals durch die erste Netzentität das mindestens eine Datenpaket (DL_P(di)) zu speichern.

9. System nach einem der Ansprüche 7 oder 8, wobei die zweite Netzentität ein Netz-Gateway des Typs S-GW ist.

10. Mobiles Endgerät (UE), das dazu bestimmt ist, mit einem mobilen Telekommunikationsnetz verwendet zu werden, das einen Netzknoten enthält, der fähig ist, für das mobile Endgerät bestimmte Abwärtsdaten zu empfangen, das ein Verarbeitungsmodul (COM) enthält, das fähig ist, Daten mit dem mobilen Netz auszutauschen, wobei das Verarbeitungsmodul konfiguriert ist, in eine Verbindungsanforderung mit dem mobilen Telekommunikationsnetz einen Parameter (IND) einzufügen, der anzeigt, ob das mobile Endgerät zur Übertragung der Abwärtsdaten Signalisierungsnachrichten oder einen mit dem mobilen Netz hergestellten Datentransportkanal verwenden möchte.

11. Mobiles Endgerät nach Anspruch 10, wobei, wenn das mobile Endgerät die Abwärtsdaten mittels Signalisierungsnachrichten empfangen möchte, der Parameter (IND) einen Wert annimmt, der anzeigt, dass es Signalisierungsnachrichten zur Übertragung von Abwärtsdaten verwenden möchte.

12. Mobiles Endgerät (UE) nach Anspruch 10, wobei, wenn das mobile Endgerät die Abwärtsdaten mittels eines mit dem mobilen Netz hergestellten Datentransportkanals empfangen möchte, der Parameter (IND) einen Wert annimmt, der anzeigt, dass es einen Datentransportkanal zur Übertragung von Abwärtsdaten verwenden möchte.

13. Computerprogramm, das Codeanweisungen zur Durchführung des Datenübertragungsverfahrens nach einem der Ansprüche 1 bis 4 aufweist, wenn dieses Programm von einem Verarbeitungsmodul eines Netzknotens (GW) ausgeführt wird.

## Claims

1. Method for transmitting data between a network node (GW) of a mobile communication network and a mobile terminal (UE), implemented by the network node following the reception of at least one data packet (DL_P(dᵢ)) intended for the mobile terminal, the method including the transmission (S03) of an alert message (Pgng) to the mobile terminal following the reception of said at least one data packet and the reception (S04), in response, of a service request (Serv_req) from the mobile terminal,
the method being **characterized in that** it includes the following steps, following the reception of the service request from the mobile terminal:
determining (S1), depending on the volume of the data to be transmitted to the mobile terminal, a channel to be used to transmit the data from among a data transport channel and a signalling channel of the mobile network;
triggering (S2) the setup of a data transport channel between the mobile terminal and the network node and transmitting (S3) said at least one data packet by way of said data transport channel when a data transport channel is to be used;
inserting (S4) the data to be transmitted into at least one signalling message (MSG(di)) and transmitting (S5) said at least one signalling message to the mobile terminal when a signalling channel is to be used.

2. Method according to Claim 1, wherein the determination (S1) of the channel to be used includes the following steps:
determining the volume (VOL(dᵢ)) of the data to be transmitted to the mobile terminal; and
comparing said volume with a decision threshold volume (VOL_{S}), a data transport channel being used when said volume is greater than the decision threshold volume and a signalling channel being used when said volume is lower than the decision threshold volume.

3. Method according to Claim 2, furthermore including the following steps, implemented by the network node and prior to the determination (S1) of the channel to be used:
triggering (S02) the storage of the at least one data packet, received by the network node, to be transmitted to the mobile terminal; and
determining the volume of data to be transmitted to the mobile terminal by adding up the number of bytes of the stored data packets, or of the data that they contain, until the service request is received.

4. Method according to Claim 2, furthermore including the following steps, implemented by the network node and prior to the determination of the channel to be used:
storing the at least one received data packet to be transmitted to the mobile terminal for a predetermined period;
the volume of data to be transmitted to the mobile terminal being calculated by adding up the number of bytes of the stored data packets, or of data that they contain.

5. Network node, intended to be used in a mobile telecommunications network, comprising a processing module configured to transmit (S03) an alert message (Pgng) to the mobile terminal following the reception of at least one data packet by a network enity which is separate from the network node and to receive (S04), in response, a service request (Serv_req) from the mobile terminal,
the network node being **characterized in that** the processing module is configured, following the reception of the service request from the mobile terminal, to:
determine (S1), depending on the volume of the data to be transmitted to the mobile terminal or on a parameter received from the mobile terminal during a phase of associating said mobile terminal with the network, a channel to be used to transmit the data from among a data transport channel and a signalling channel of the mobile network;
when it is determined that a data transport channel is to be used, trigger (S2) the setup of a data transport channel with the mobile terminal with a view to transmitting (S3) said at least one data packet by way of said data transport channel,
when it is determined that a signalling channel is to be used, insert (S4) the data to be transmitted into at least one signalling message (MSG(di)) and transmit (S5) said at least one signalling message to the mobile terminal.

6. Network node according to Claim 5, **characterized in that** said network node is a mobility management entity (MME).

7. System comprising a first network entity and a second network entity, the first network entity being a network node according to either of Claims 5 and 6, wherein the second network entity comprises a processing module able to receive at least one data packet (DL_P(dᵢ)) to be transmitted to a mobile terminal (UE) and configured to transmit said at least one data packet (DL_P(dᵢ)) to the first network entity so that said first network entity transmits said at least one data packet (DL_P(dᵢ)) to the mobile terminal (UE) after having determined a channel to be used, from among a data transport channel and a signalling channel of the mobile network, to transmit said at least one data packet (DL_P(dᵢ)).

8. System according to Claim 7, wherein the second network entity is able to store said at least one data packet (DL_P(dᵢ)) while awaiting the determination, by the first network entity, of the channel to be used to transmit said at least one data packet.

9. System according to either of Claims 7 and 8, wherein the second network entity is an S-GW type network gateway.

10. Mobile terminal (UE) intended to be used with a mobile telecommunications network comprising a network node able to receive downlink data intended for the mobile terminal, comprising a processing module (COM) able to exchange data with the mobile network, the processing module being configured to insert, into a request to associate with the mobile telecommunications network, a parameter (IND) indicating whether the mobile terminal wishes to use signalling messages or a data transport channel set up with the mobile network for the transmission of the downlink data.

11. Mobile terminal (UE) according to Claim 10, wherein, when the mobile terminal wishes to receive the downlink data by way of signalling messages, the parameter (IND) adopts a value indicating that it wishes to use signalling messages to transmit downlink data.

12. Mobile terminal (UE) according to Claim 10, wherein, when the mobile terminal wishes to receive the downlink data by way of a data transport channel set up with the mobile network, the parameter (IND) adopts a value indicating that it wishes to use a data transport channel to transmit downlink data.

13. Computer program including code instructions for the implementation of the data transmission method according to one of Claims 1 to 4 when this program is executed by a processing module of a network node (GW).
